(19) Europäisches Patentamt
European Patent Office
Office européen des brevets

(11) **EP 2 172 335 A2**

(12) **EUROPEAN PATENT APPLICATION**

(43) Date of publication:
**07.04.2010 Bulletin 2010/14**

(51) Int Cl.:
***B32B 27/00*** *(2006.01)* ***B32B 27/32*** *(2006.01)*

(21) Application number: **09171859.3**

(22) Date of filing: **30.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.09.2008 JP 2008252516**

(71) Applicant: **Dai Nippon Printing Co., Ltd.**
**Tokyo 162-8001 (JP)**

(72) Inventors:
• **ENDOU, Hiroshi**
**Tokyo 162-8001 (JP)**

• **TAKEMOTO, Masataka**
**Tokyo 162-8001 (JP)**
• **WAKAMATSU, Yuji**
**Tokyo 162-8001 (JP)**
• **MASUDA, Hiroshi**
**Tokyo 162-8001 (JP)**

(74) Representative: **Viering, Jentschura & Partner**
**Grillparzerstrasse 14**
**81675 München (DE)**

(54) **Decorative sheet**

(57) A decorative sheet which can prevent the occurence of fins and blooming on machining is provided. The decorative sheet comprises at least a substrate layer, a design layer, and a surface protective layer which is positioned at the outermost surface, and they being layered in this order directly or indirectly, and which is characterized in that the elongation at break for the decorative sheet as a whole is not more than 400%.

**FIG. 1**

## Description

### Field of the Invention

This invention relates to a decorative sheet, particularly, this invention relates to a decorative sheet which can prevent occurring fins and blooming on machining.

### Background Art

Conventionally, flooring materials for room on house construction have a laminate structure wherein natural lumbers are stuck onto a woody substrate have been used on house construction. However, the surface properties such as water resistance, solvent resistance, abrasion resistance, etc., of the flooring materials are not sufficient because the top surface of the flooring materials is made of the natural lumbers, and thus corrosion and deform of the flooring material has arisen and these, and thus, these have been considered as problems.

Recently, in order to solve these problems, as the flooring material for room on house construction, flooring materials which have a laminate structure wherein a decorative sheet is stuck onto a woody substrate have been used, wherein the decorative sheet comprises a substrate sheet, a design layer on which a woody pattern is printed, and a thermoplastic resin layer, they being laminated together. By using such a decorative sheet, the problems such as corrosion which may arise when using as the flooring material on house construction can be eliminated, and the surface properties such as water resistance, solvent resistance, abrasion resistance, etc., can be improved.

However, when the surface of such a decorative sheet undergoes machining with a machining tool such as circular saw and rooter (concretely, machining for forming a groove on the surface, and so on), the decorative sheet is forced to soften in heat generated on the machining, and the substrate sheet and the thermoplastic layer is forced to be extended by the stress, and thus the problems such as fins and blooming occur at the portion which underwent machining. The fins and blooming will degrade appearance of the decorative sheet.

Under such a circumstance, Patent Literature 1 discloses a decorative sheet in which the glass transition temperature of the interlayer between the decorative sheet and woody substrate is set within a prescribed range in order to improve the machinability of the decorative sheet. Further, Patent Literature 2 discloses a decorative sheet in which the substrate layer is made into a sheet by calendering in order to improve the machinability of the decorative sheet, with respect to the decorative sheet in which a surface protective layer made of a thermoplastic resin is layered on the surface of the substrate layer. According to the techniques disclosed in Patent Literature 1 and Patent Literature 2 which each focuses only an individual layer which composes a part of the decorative sheet, although the machinability of a certain particular layer of (i.e., the interlayer in Patent Literature 1, and the substrate layer in Patent Literature 2) can be improved, there is no disclosure about the correlation between the machinability of the decorative sheet and the physical properties of the decorative sheet and so on, and thus, they have not still reached a decisive solution for improving the machinability of the decorative sheet as a whole.

[Patent Literature 1]    JP 2004 - 84284 A
[Patent Literature 2]    JP 2006 - 123235 A

### Disclosure of the Invention

Problems to be Solved by the Invention

The present invention has been made in consideration of such a circumstance, and the present invention mainly aims to provide a decorative sheet which can prevent occurring fins and blooming on machining.

### Means for Solving the Problems

The present invention solving the above mentioned problems is a decorative sheet which comprises at least a substrate layer, a design layer, and a surface protective layer which is positioned at the outermost surface, and they being layered in this order directly or indirectly, and which is characterized that the elongation at break for the decorative sheet as a whole is not more than 400%.

In the decorative sheet according to the present invention, the substrate layer may be made of a polyethylene resin and the surface protective layer is made of an ionization radiation cured resin.

**Effect of the Invention**

According to the present invention, by setting the elongation at break for the decorative sheet as a whole to be not more than 400%, the machinability of the decorative sheet can be improved, and the occurrence of fins and blooming on machining can be prevented.

**Best Mode for Carrying Out the Invention**

The decorative sheet 1 of the present invention is a decorative sheet which comprises at least a substrate layer, a design layer, and a surface protective layer which is positioned at the outermost surface, and they being layered in this order directly or indirectly, and which is characterized that the elongation at break for the decorative sheet as a whole is not more than 400%.

We, the inventors, have made a diligent study for mechanisms of the occurrences of fins and blooming on the decorative sheet in order to prevent these phenomena, and we have found the mechanisms in the end. We will now explain the mechanisms of the occurrences of fins and blooming at first.

As shown by the coefficient of elasticity, the decorative sheet expresses an elastic property until it receives a certain degree of the stress, and thus, even when it is induced a primary elongation by a stress, it can return the original state after releasing the stress. However', when it receives a certain degree or more of the stress, such as on the machining, the elongated state induced by such stress does not return to the original state. When the breaking (machining) of the decorative sheet is performed under such a state that the stress of a certain degree or more is applied (i. e., the state that elongation is induced in the decorative sheet), the fins andbloomingwill occur at themachinedportion. Namely, we have elucidated that the fins and blooming at the machined portion were caused by the elongation of the decorative sheet on the breaking (machining).

The elongation at break as an indicator for determining how degree the decorative sheet can elongate before breaking is indicated the following formula (1). The elongation at break can be represented by "elongation (mm) of a test piece at break / length (mm) of the test piece before applying stress", and concretely, the higher the elongation at break becomes, the larger the elongation of the test piece at break becomes. Contrary, the lower the elongation at break becomes, the smaller the elongation of the test piece at break becomes.

As described above, since the fins and blooming at the machinedportion are caused by the elongation of the decorative sheet on the breaking (machining), it becomes possible to prevent the occurrences of fins and blooming if the elongation at break can be repressed at low.

```
Elongation at break (%) = (Elongation (mm) of a test

piece at break / Length (mm) of the test piece before applying

stress) X 100 ----- (Formula 1)
```

Then, we have made exhaustive experiments on the basis of the above mentioned mechanisms for occurrences of fins and blooming. And, at last, we have found that the fins and blooming occurred on the machining can be completely prevented by setting the elongation at break for the decorative sheet as a whole to be not more than 400%, and have brought the decorative sheet of the present invention to completion. Therefore, with respect to the decorative sheet according to the present invention, there is no particular limitation for the materials and construction of the decorative sheet as far as the elongation at break for the decorative sheet as a whole is not more than 400%.

In order to set the elongation at break for the decorative sheet as a whole to a value of not more than 400%, it is preferable that both of the elongation at break in width direction and the elongation at break in longitudinal direction are set to a value of not more than 400%, respectively.

Further, the stress required for breaking the decorative sheet on the machining is depended on the energy at break for the decorative sheet as a whole, and when the energy at break for the decorative sheet as a whole is high, the load giving onto the decorative sheet as a whole on the machining becomes high and it is followed by becoming causes of the fins and the blooming. When considering such points, it is preferable that the energy at break for the decorative sheet as a whole is small in order to prevent the fins and the blooming completely. Concretely, it is preferable that the energy at break for the decorative sheet as a whole is the energy at break for the decorative sheet as a whole is not more than 6.0 Nm. When the energy at break for the decorative sheet as a whole is set so as to be not more than 6.0 Nm, it becomes possible to decrease the stress applied to the decorative sheet on the machining, in other words, the load giving onto the decorative sheet as a whole on the machining, and therefore, it becomes possible to prevent the fins and the blooming effectively.

Herein, the energy at break for the decorative sheet as a whole is determined by integrating a part of curve from the origin point to the break point, wherein the curve is the load - displacement curve which is obtained in the tensile strength test in accordance with JIS K 7127, and plotting the load in ordinate and the displacement in abscissa, in order to calculate an area surrounded by the curve and the abscissa axis; and defining the calculated area as the energy at break.

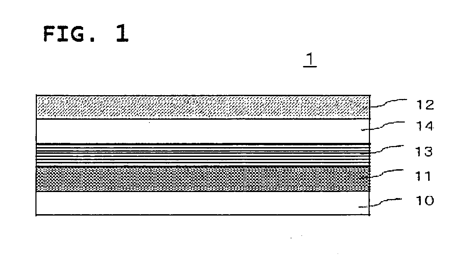

Now, an concrete constitution embodiment of the decorative sheet 1 according to the present invention which has an elongation at break as a whole of not more than 400% will be explained. Fig. 1 shows an constitution of the decorative sheet according to the present invention.

As shown in Fig. 1, the decorative sheet 1 according to the present invention comprises at least a substrate layer 10, a design layer 11, and a surface protective layer 12 which is positioned at the outermost surface, and they being layered in this order directly or indirectly (With respect to the decorative sheet shown in Fig. 1, the substrate layer 10 and the design layer 11 are layered each other directly, and the design layer 11 and the surface protective layer 12 are layered each other indirectly via a thermoplastic resin layer 13 and a primer layer both of which are mentioned later.) And, the decorative sheet 1 according to the present invention is characterized that the elongation at break for the decorative sheet 1 as a whole is not more than 400%. When the elongation at break for the decorative sheet 1 as a whole is set to be not more than 400% as mentioned above, it becomes possible to prevent the occurrences of the fins and the blooming on the machining (including groove machining) with a machining tool and so on.

Next, the individual layers which constitute the decorative sheet will be explained concretely.

(Substrate layer)

The substrate layer 10 is an essential layer for the decorative sheet 1 according to the present invention, and it functions as a base layer of the decorative sheet 1. As the substrate layer 10, polyolefin type thermoplastic resins are preferable in consideration of the processing compatibility, the environmental friendliness, the cost of production, and so on. As the polyolefin type thermoplastic resin, any one of those which have been usually used in the field of the decorative sheet may be used in accordance with an appropriate selection by the manufacturer. As the polyolefin resins, for instance, polypropylene resins and polyethylene resins are enumerated. Among them, polyetylene resins are particularly preferable for the substrate layer 10 of the present invention. When a polyethylene resin is used as the substrate layer 10 and the surface protective layer which is made of an ionization radiation cured resin as mentioned later is provided at the uppermost surface of the decorative sheet 1, it becomes possible to decrease more effectively the elongation at break for the decorative sheet 1 as a whole, and therefore, it becomes possible to prevent more effectively the occurrences of the fins and blooming on the decorative sheet 1 as a whole. More particularly, when a polyetylene resin is used as the substrate layer 10, it is possible to give a value of the energy at break of not more than 6.0 Nm with ease, and thus it can contribute the effective prohibition for the occurrences of fins and blooming.

The thickness of the substrate layer 10 is not particularly limited and it can be set appropriately in consideration of the elongation at break of the decorative sheet. The thickness of the substrate layer 10 may be usually not more than 200 $\mu$m, and more preferably, in the range of 50 $\mu$m to 100 $\mu$m.

In the substrate layer 10, various additives, such as a filling agent, a matting agent, a foaming agent, a flame retardant, a lubricant, an antistatic agent, an antioxidant, an ultra violet ray absorbing agent, a photo - stabilizing agent, a pigment and so on, may be optionally included.

Further, the substrate layer 10 may optionally undergo the corona discharging treatment on its contacting face to the design layer 11, in order to enhance the adhesiveness to the ink(s) which constitutes the design layer 11. The method and condition of the corona discharging treatment may obey the known procedure.

(Design layer)

The design layer 11 is also an essential layer for the decorative sheet 1 according to the present invention, and it functions so as to giving a decoration to the substrate layer 10. The design layer 11 may be formed by printing a varying design pattern with using ink(s) and a printer. As of the decorative sheet 1. As the design pattern, for instance, woody patterns; stone - like patterns which are in imitation of surfaces of rocks and stone such as marble patterns (e. g., travertine marble patterns) or the like; fabric - like patterns which are in imitation of the grains of fabrics, or cloth pattern; glazed tile layout - like patterns; face brick layout - like patterns; and so on are enumerated, and further, patterns being any combination thereof such as wooden mosaic - like patterns, patch work - like patterns, and so on are also enumerated. These design patterns may be usually formed by multi - color printing with process colors consisting of yellow, red, blue and black. Alternatively, these design patterns may be formed by multi - color printing wherein special colors are used with preparing respective color printing plates which constitute the design.

As the design inks used for the design layer 11, those which coloring agent(s) such as pigment, or dye; extender pigment(s); solvent(s); stabilizer(s); plasticizer(s); catalyst(s); hardening agent (s) and so on are appropriately mixed into a binder may be used. As the binder, there is no particular limitation, and for instance, polyurethane type resins, vinyl chloride - vinyl acetate type copolymer resins, vinyl chloride - vinyl acetate - acrylic type copolymer resins, chlorinated polypropylene type resins, acrylic type resins, polyester type resins, polyamide type resins, butyral type resins, polystyrene type resins, nitro cellulose type resins (for instance, nitro cellulose - alkyd type resins), cellulose acetate type resins and so on are enumerated, and the binder to be used can be selected freely one kind of resin solely or any combination of two or more kinds of resins from them.

(Surface protective layer)

The surface protective layer 12 is a further essential layer for the decorative sheet 1 according to the present invention, and it provides at the outermost surface of the decorative sheet and functions to protect the surface of the decorative sheet 1. With respect to the surface protective layer, there is no particular limitation, and any one of those which have been usually used as the protective layer in the field of the decorative sheet may be used in accordance with an appropriate selection by the manufacturer. It is preferable that the surface protective layer 12 of the present invention is made of an ionization radiation cured resin. Since the ionization radiation cured resin has a property that it can decrease the elongation at break of the decorative sheet more effectively, it becomes possible to decrease the elongation at break of the decorative sheet as a whole when providing the surface protective layer 12 made of the ionization radiation cured resin. When the polyethylene resin is used as the substrate layer 10 and the ionization radiation cured resin layer is used as the surface protective layer 12, it becomes possible to form a decorative sheet 1 which has a particularly low elongation at break due to the synergistic effect of the surface protective layer 12 made of the ionization radiation cured resin and the substrate layer 10 made of the polyethylene resin.

An ionization radiation curing resin is a composition capable of hardening with ionization radiation, and concretely, a composition capable of hardening with ionization radiation, in which prepolymer (which includes the so-called "oligomer") and/or monomer which each have radically polymerizable unsaturated bond (s) or cationically polymerizable functional group(s), are appropriately mixed is suitably used as the ionization radiation curing resin. These prepolymer (s) and/or monomer(s) is used solely or in any combination thereof. Incidentally, the curing reaction is usually cross - linking curing reaction.

As the prepolymers or monomers as mentioned above, concretely, include compounds which each have radically polymerizable unsaturated bond(s), such as (meth)acryloyl group, (meth)acryloyloxy group or so on, or cationically polymerizable functional group(s), such as epoxy group or so on, in its molecule. Further, polyene / thiol type prepolymers which are a combination of polyene (s) and thiol (s) are also preferably used. Herein, for instance, the expression "(meth) acryloyl" denotes both of acryloyl and methacryloyl. As examples of the prepolymer (oligomer) having radically polymerizable unsaturated group(s), urethane (meth)acrylates, polyester (meth)acrylates, epoxy (meth)acrylates, melamine (meth)acrylates, triazine (meth) acrylates, silicone (meth) acrylates are enumerated and usable. As the molecular weight thereof, it is usually in the range of about 250 - 100,000.

Further, since cross - linking density can be enhanced by using the ionization radiation curing resin for the surface protective layer 12, it becomes possible to obtain a superior resistance to scratching as compared with the case that the two liquid curing type urethane resin is used. As the result, even when decorative boards which are produced by applying the decorative sheet interested to substrate boards are transported under the condition that they are stacked each other, scratches are hardly occurred onto the surfaces of the decorative sheets.

Further, as the ionization radiation curing resin, electron beam curing type resins are preferable. Because, the correlation between the curing reaction rate and the temperature for the electron beam is lesser than that for the ultra violet ray, and further the electron beam has a lesser influence to the heating of the sheet, and thus it is possible to realize a high speed curing and to improve the processing rate. Further, even when the ultra violet absorbing agent is added to the surface protective layer, the addition of which is advantageous or essential to the surface protective layer in order to improve the weather resistance, the ultra violet absorbing agent does not give an adverse effect on the curing reaction. Therefore, when the electron beam curing type resin is used, an advantage that the ultra violet absorbing agent can be used is also attained. Thus, the use of the electron beam curing resin also gives an advantage for the weather resistance.

Herein, as the ionization radiation, electromagnetic or charged particles, both of which have energy capable of causing the curing reactions of molecules in the ionization radiation curing resin (composition), is usable. Although the ultra violet ray or the electron beam is used usually, visible lights, X - rays, ion beams and so on are usable alternatively. As a source of the ultra violet ray, any one of luminous sources, such as extra - high pressure mercury lamps, high pressure mercury lamps, low pressure mercury lamps, carbon arc lamps, black lights, metal halide lamps, and so on, can be used. As the wavelength of the ultra violet ray, a wavelength in a wavelength band of 190 nm - 380 nm is usually utilized. As a source of the electron beam, any one of various electron beam accelerators, such as Cockcroft-Walton type accelerators, Van de Graaff type accelerators, resonance transformer type accelerators, insulated core transformer type accelerators, or linear types accelerators, Dynamitron type accelerators, high frequency wave type accelerators, and so on, can be used, and as the source of the electron beam, one which can emit electrons having an energy of 100 - 1000 keV, preferably, 100 - 300 keV, is used.

As the thickness of the ionization radiation cured resin layer, there is no particular limitation, and which can be set appropriately as far as it has a low elongation at break and it does not cause the fins and blooming. Usually, the thickness is in the range of 1 - 200 $\mu$m, and preferably, it is in the range of 1 $\mu$m - 100 $\mu$m, and more preferably, it is in the range of 5 $\mu$m - 50 $\mu$m. When the surface protective layer is made of the ionization radiation cured resin, it becomes possible to decrease the elongation at break of the substrate layer 10 while the function of surface protection for the decorative sheet 1 is maintained.

The thermoplastic resin layer 13 is an optional layer in the present invention, and it may be stacked onto the design layer 11 in order to protect the design layer 11 from the scratches and so on, in order to improve the surface strength of the decorative sheet 1, in order to provide a sense of the painting, or the like. Therefore, the thermoplastic resin layer should have transparency such as colorless and transparency, colored transparency, or translucency. As far as the thermoplastic resin has transparency, there is no particular limitation. As such a thermoplastic resin layer, for instance, flexible, semi-rigid, or rigid polyvinyl chlorides, polyethylene terephthalates, polybutylene terephthalates, polyamides, polyethylenes, polypropylenes, ethylene - vinyl acetate copolymers, ethylene - acrylic acid copolymers, ethylene - acrylic ester copolymers, ionomers, acrylic esters, methacrylic esters, and so on, can be enumerated. In the present invention, as the transparent resin layer, polyolefin type resins such as polypropylenes are particularly preferable.

In addition, the thermoplastic resin layer 13 may be stacked over the design layer 11 via an adhesive layer (not shown in the figure).

(Primer layer)

The primer layer is a layer which is provided in order to improve the adhesiveness between the design layer 11 or the thermoplastic resin layer 13 and the surface protective layer 12, and it is an optional layer in the present invention. As the primer layer, for instance, polyester resins, polyurethane resins, acrylic resins, polycarbonate resins, vinylchloride - vinyl acetate copolymers, polyvinyl butyral, and so on, are enumerated.

**Example**

Now, the present invention will be explained in further detail with the following practical example and comparative examples.

(Example)

Polyethylene resin (80 $\mu$m in thickness) was used as the substrate layer 10, and the design layer 11 was formed onto the substrate layer 10 by gravure printing. Then, onto the design layer 11, polypropylene resin (60 $\mu$m in thickness) was formed as the thermoplastic resin layer 13 by extrude lamination, and a primer layer 14 was further formed onto the thermoplastic resin layer 13, and the last, at the uppermost surface, an electron beam cured type resin layer (15 $\mu$m in thickness) which had included an urethane (meth)acrylate oligomer was formed as the surface protective layer 12. Thereafter, the layered material underwent emboss treatment in order to obtain a decorative sheet of Example 1.

(Comparative Example 1)

A decorative sheet of Comparative Example 1 was prepared by repeating the same procedure in Example except that polypropylene resin (60 $\mu$m in thickness) was used instead of the substrate layer of Example.

(Comparative Example 2)

A decorative sheet of Comparative Example 2 was prepared by repeating the same procedure in Example except that two liquid curing type urethane type resin was used and cured so as to form the surface protective layer instead of forming the surface protective layer of Example.

(Comparative Example 3)

A decorative sheet of Comparative Example 3 was prepared by irradiating the decorative sheet formed by the same procedure of Comparative Example 2 with the electron beam.

(Comparative Example 4)

A decorative sheet of Comparative Example 4 was prepared by repeating the same procedure in Comparative Example 1 except that two liquid curing type urethane type resin was used and cured so as to form the surface protective layer instead of forming the surface protective layer of Comparative Example

(Comparative Example 5)

A decorative sheet of Comparative Example 5 was prepared by irradiating the decorative sheet formed by the same procedure of Comparative Example 4 with the electron beam.

(Tensile strength Test)

In accordance with JIS K 7127, the tensile strength test was performed for the decorative sheets of Example and Comparative Examples 1 - 5 in order to determine the modulus of elasticity, the elongation at break, and the energy at break in the width direction of the sheet and in the longitudinal direction of the sheet. The obtained results are shown in Table 1.

(Machinability Test)

Decorative boards for Example and Comparative Examples 1 - 5 were prepared by the individual decorative sheets of Example and Comparative Examples 1 - 5 are laminated over a lauan plywood of 12 mm in thickness via a two - liquid cured type urethane type adhesive layer, respectively.
The obtained floor materials of Example and Comparative Examples 1 - 5 underwent groove machining with a rooter (3620A manufactured by Makita Corporation, which was equipped with a ultra hard V-shape grooving bit (manufactured by Dainissyo Co., Ltd., axis diameter: 6 mm, included angle: 90°)) at a rotation rate of 24000 rpm, and after the machining, evaluations of whether fins and blooming in the tested floor materials were present or not was performed.
The evaluation whether the fins are presence or not was done in accordance with contact sense, and one which did not have the fin at all was expressed as ◎, one which had few fins was expressed as △, and one which had a large numbers of fins was expressed as ×, respectively. Further, the evaluation of the occurrence of blooming was done in accordance with visible observation, and one which did not have the blooming at all was expressed as ◎, and one which had blooming was expressed as ×, respectively. The evaluation results of the machinability test are shown in Table 2.
Table 1

| | | Example 1 | Comparative Example 1 | Comparative Example 2 | Comparative Example 3 | Comparative Example 4 | Comparative Example 5 |
|---|---|---|---|---|---|---|---|
| Modulus of elasticity | Width direction of sheet (kgf/mm$^2$) | 111 | 102 | 92 | 83 | 97 | 98 |
| | Longitudinal direction of sheet (kgf/mm$^2$) | 108 | 97 | 89 | 92 | 98 | 98 |
| Elongation at break | Width direction of sheet (%) | 10 | 430 | 470 | 420 | 420 | 460 |
| | Longitudinal direction of sheet (%) | 150 | 460 | 510 | 450 | 450 | 470 |
| Energy at break | Width direction of sheet (Nm) | 0.26 | 7.5 | 7.9 | 6.7 | 10.1 | 9.7 |
| | Longitudinal direction of sheet (Nm) | 2.0 | 10.3 | 10.3 | 8.6 | 11.6 | 11.7 |

Table 2

| | Example 1 | | Comparative Example 1 | | Comparative Example 2 | | Comparative Example 3 | | Comparative Example 4 | | Comparative Example 5 | |
|---|---|---|---|---|---|---|---|---|---|---|---|---|
| | Fin | Blooming | Fin | Blooming | Fin | Blooming | Fin | Blooming | Fin | Blooming | Fin | Blooming |
| Width direction of sheet (kgf/mm$^2$) | ◎ | ◎ | △ | ◎ | × | × | × | × | × | × | × | × |
| Longitudinal direction of sheet (kgf/mm$^2$) | ◎ | ◎ | △ | ◎ | × | × | × | × | × | × | × | × |

(Results of evaluation)

The decorative sheet of Example 1 of which values of elongation at break in the width direction of sheet and in the longitudinal direction were not more than 400%, respectively, shown a small elongation as a whole of the decorative sheet until the sheet was broken, and further, there were no occurrence of the fin and the blooming as shown in Table 2. Thus, the decorative sheet of Example 1 was able to provide a superior result for the appearance thereof.

On the other hand, the decorative sheets of Comparative Examples 1 - 5 shown values of elongation at break in the width direction of sheet and in the longitudinal direction both of which were more than 400%, and thus, it was found that these decorative sheets were elongated largely until they were broken, as compared with the decorative sheet of Example 1. Further, with respect to the decorative sheet of Comparative Example 1 of which substrate layer was made of polypropylene resin, the occurrence of fins was observed although the occurrence of blooming was not observed. Further more, with respect to the decorative sheets of Comparative Examples 2 - 5 which each have a surface protective sheet substrate layer made from the two liquid curing type urethane resin, the occurrences both of fins and blooming were observed.

From the results as mentioned above, it was found that the decorative sheet of which elongation at break is not more than 400% can prevent completely the occurrences of the fin and the blooming on the machining process. On the contrary, when the elongation at break is more than 400%, it was found that the fins and the blooming were occurred on the machining process, and thus it was found that the appearance of the decorative sheet was forced to be degraded.

**Brief Description of the Drawing**

[Fig. 1] is a schematic sectional view of the decorative sheet according to the present invention.

**Explanation of the Numerals**

1     Decorative sheet
10    Substrate layer
11    Design layer
12    Surface protective layer
13    Thermoplastic resin layer
14    Primer layer

**Claims**

1. A decorative sheet which comprises at least a substrate layer, a design layer, and a surface protective layer which is positioned at the outermost surface, and they being layered in this order directly or indirectly, and which is **characterized that** the elongation at break for the decorative sheet as a whole is not more than 400%.

2. The decorative sheet according to Claim 1, wherein the substrate layer comprises a polyethylene resin, and the surface protective layer comprises an ionization radiation cured resin.

FIG. 1

<u>1</u>

|    |    |
|----|----|
|    | 12 |
|    | 14 |
|    | 13 |
|    | 11 |
|    | 10 |

**EP 2 172 335 A2**

## REFERENCES CITED IN THE DESCRIPTION

**Patent documents cited in the description**

- JP 2004084284 A

- JP 2006123235 A